# FASCICULE DE BREVET EUROPEEN

(11) **EP 1 580 077 B1**
(45) Date de publication et mention de la délivrance du brevet: **06.09.2006**
(21) Numéro de dépôt: 05290629.4
(22) Date de dépôt: 22.03.2005
(51) Int. Cl.: B60R 13/02, B29C 44/12

(54) **Elément d'habillage, notamment pour intérieur d'automobile, et son procédé de fabrication**
Verkleidungselement, insbesondere für einen Fahrzeuginnenraum, und Herstellungsverfahren hierfür
Trim component, in particular for a vehicle interior, and its method of manufacture

(30) Priorité: 26.03.2004 FR 0403157
(43) Date de publication de la demande: 28.09.2005
(73) Titulaire: Faurecia Interieur Industrie, 92000 Nanterre (FR)
(72) Inventeur: Ory, Daniel,c/o Faurecia Interieur Industrie, 60110 Meru (FR)
(74) Mandataire: Arnaud, Jean

(56) Documents cités:
- US-A- 5 922 431
- US-B1- 6 280 816

## Description

L'invention concerne un élément d'habillage, notamment d'habillage intérieur de véhicule, et son procédé de fabrication.

On connaît déjà des éléments d'habillage intérieur de véhicule qui comportent un élément de base de matière plastique rigide, une peau souple recouvrant l'élément de base et ayant une épaisseur pratiquement constante, et une couche de mousse disposée entre l'élément de base et la peau.

On sait déjà réaliser un tel élément d'habillage en disposant la peau et l'élément de base dans une cavité de moule et en injectant de la mousse entre la peau et l'élément de base. La mousse solidarise ainsi la peau et l'élément de base.

L'élément d'habillage comprend donc une zone marginale dans laquelle la peau s'étend jusqu'au bord de l'élément de base et n'est pas liée à celui-ci du fait de l'absence de mousse. Cette partie extérieure formée par la zone marginale de l'élément de base et de la peau est destinée à être insérée dans une gorge pour être assemblée, par exemple dans une planche de bord d'automobile.

Pour que cet assemblage puisse être réalisé dans des conditions satisfaisantes, la zone marginale de l'élément d'habillage doit présenter une épaisseur sensiblement constante et nettement inférieure à celle de la zone principale. Cependant, à cause de l'absence de mousse entre l'élément de base et la peau dans la zone marginale, la peau peut s'écarter de l'élément de base et l'insertion de l'élément d'habillage dans une gorge peut être difficile. Il est donc souhaitable, surtout lorsque la zone marginale a une largeur importante, que la peau soit tenue contre l'élément de base sur une partie au moins de la zone marginale.

Pour que la peau soit tenue contre l'élément de base, on peut utiliser la mousse qui assure déjà la solidarisation de la peau et de l'élément de base dans la zone principale de l'élément d'habillage. Cependant, des problèmes peuvent se poser dans la zone marginale, soit à cause d'un serrage excessif (absence de mousse), soit à cause d'un serrage insuffisant (passage de mousse à l'extérieur sur la peau qui peut être salie). En outre, l'air qui est chassé par la mousse lors de l'injection dans un espace réduit peut ne pas être évacué convenablement et empêcher la mousse d'avancer jusqu'à l'emplacement prévu pour la tenue de la peau.

Pour la solution des problèmes précités, l'invention met en oeuvre l'introduction de mousse entre l'élément de base et la peau dans une partie de la zone marginale seulement, dans des conditions bien définies. En outre, pour que la peau soit tenue jusqu'à proximité du bord de l'élément de base et simultanément que la partie marginale garde une épaisseur constante sur une grande largeur, il est souhaitable que l'élément de base délimite des saillies entre lesquelles la mousse peut avancer à proximité du bord de l'élément d'habillage.

Plus précisément, l'invention concerne un élément d'habillage, du type qui comprend un élément de base de matière plastique rigide, une peau souple couvrant l'élément de base et présentant une épaisseur sensiblement constante, et une couche de mousse disposée entre l'élément de base et la peau, l'élément d'habillage présentant une zone principale et une zone marginale, la zone marginale s'étendant jusqu'aux bords de l'élément de base et de la peau, l'épaisseur de l'élément d'habillage dans la zone marginale étant sensiblement constante et inférieure à son épaisseur dans la zone principale ; selon l'invention, la zone marginale comprend une zone d'extrémité qui s'étend à la périphérie de l'élément d'habillage et dans laquelle l'élément de base présente une épaisseur sensiblement constante et la couche de mousse est absente, et une zone d'accrochage placée à distance du bord de l'élément de base et du bord de la peau et dans laquelle la couche de mousse s'étend entre l'élément de base et la peau, l'élément de base présentant dans la zone d'accrochage une épaisseur inférieure à son épaisseur dans la zone d'extrémité.

De préférence, la zone d'extrémité présente des parties de largeur sensiblement constante.

De préférence, la zone d'extrémité présente localement des saillies dirigées vers la zone principale. Les saillies s'étendent avantageusement jusqu'à la zone principale.

De préférence, la zone d'accrochage s'étend sur la plus grande partie de la zone marginale.

Dans une variante, l'élément d'habillage comporte au moins un canal de ventilation disposé dans l'élément de base dans la zone d'extrémité, entre la zone d'accrochage et l'extérieur de la zone d'extrémité. De préférence, le canal de ventilation au moins est à un emplacement de l'élément d'habillage auquel l'élément de base se prolonge au-delà de la peau.

L'invention concerne aussi un procédé de fabrication d'un élément d'habillage selon les paragraphes précédents, qui comprend les étapes suivantes :
la réalisation d'un élément de base en matière plastique rigide, ayant une zone marginale qui comprend une zone d'extrémité s'étendant à la périphérie et ayant une épaisseur sensiblement constante, et une zone d'accrochage s'étendant à distance du bord de l'élément de base et ayant une épaisseur inférieure à l'épaisseur dans la zone d'extrémité,
la réalisation d'une peau souple d'épaisseur sensiblement constante,
la couverture de l'élément de base par la peau, et la disposition de la peau et de l'élément de base dans une cavité de moule possédant un poinçon et une matrice, de sorte que, lorsque le moule est fermé, le poinçon et la matrice sont à une distance sensiblement constante dans la zone marginale qui comprend la zone d'extrémité et au moins une partie de la zone d'accrochage,
la fermeture du moule et l'application par pression de la peau contre l'élément de base dans la zone d'extrémité, et
l'injection de mousse entre l'élément de base et la peau.

De préférence, l'élément de base comporte au moins un canal de ventilation disposé dans la zone d'extrémité entre la zone d'accrochage et l'extérieur de la zone d'extrémité, et le procédé comprend l'arrêt de l'injection quand de la mousse sort par le canal, au-delà de la peau.

D'autres caractéristiques et avantages de l'invention seront mieux compris à la lecture de la description qui va suivre d'exemples de réalisation, faite en référence aux dessins annexés sur lesquels :
la figure 1 est une vue en perspective d'un élément d'habillage réalisé selon l'invention et comprenant un élément de base ;
la figure 2 est une coupe d'une partie de l'élément d'habillage de la figure 1, suivant le plan de coupe repéré par la référence II-II de la figure 1 ;
la figure 3 est une vue en perspective d'une partie d'élément de base, coupée par le plan II-II de la figure 1 ;
la figure 4 illustre une étape de mise en oeuvre du procédé selon l'invention ; et
la figure 5 est analogue à la figure 3 et illustre une variante dans laquelle la ventilation de la cavité de moulage est assurée.

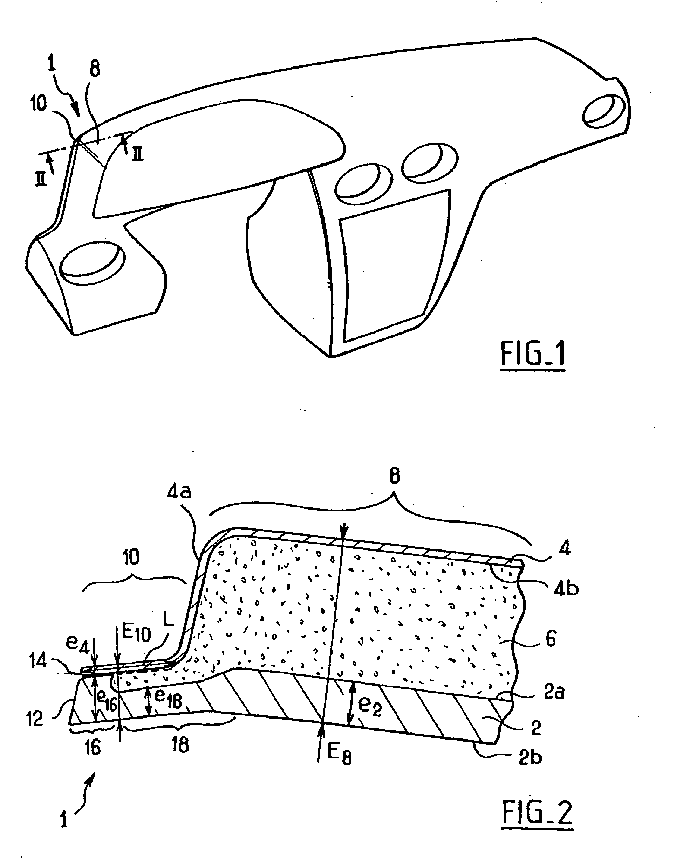

Les figures 1 à 3 représentent un élément d'habillage intérieur de véhicule sous forme d'une coiffe de planche de bord 1. Cette coiffe 1 comporte un élément de base, parfois appelé "insert" 2, une peau souple 4 recouvrant l'élément de base 2, et une couche de mousse 6 disposée entre l'élément de base 2 et la peau 4.

L'élément de base 2 est formé de matière plastique rigide, et donne sa résistance mécanique à la coiffe 1. Il a la configuration d'une plaque d'épaisseur e₂ pratiquement constante et mise à la forme nécessaire. L'élément de base 2 a donc deux faces 2a, 2b et se termine à un bord 12. La face 2a est destinée à être entièrement cachée par la peau souple 4 dont le bord 14 se termine avantageusement au niveau du bord 12 de l'élément de base 2.

La peau 4 a une face apparente 4a destinée à donner à la coiffe 1 des caractéristiques esthétiques, et une face opposée 4b. Elle a une épaisseur e₄ qui est pratiquement constante sur toute la coiffe 1, entre les deux faces 4a et 4b.

Une couche de mousse 6 est disposée entre la face 2a de l'élément de base 2 et la face arrière 4b de la peau 4.

La coiffe 1 comporte une zone principale 8 dans laquelle la couche de mousse 6 a une épaisseur relativement importante, et une zone marginale 10. Cette zone marginale 10 a une largeur L qui est pratiquement constante et elle s'étend autour de la zone principale 8, jusqu'aux bords 12, 14 de l'élément de base 2 et de la peau 14. L'épaisseur E₁₀ de la coiffe 1 dans la zone marginale 10 est pratiquement constante à la périphérie de la coiffe 1.

La partie marginale 10 est destinée à coopérer avec un autre élément d'habillage intérieur du véhicule par accostage contre cet élément. La zone marginale 10 est donc cachée dans l'autre élément, une fois l'assemblage du véhicule terminé.

La coiffe 1 présente, dans sa zone principale 8, une épaisseur E₈ qui est bien supérieure à l'épaisseur E₁₀ dans la zone marginale, car la mousse a une épaisseur notable dans la zone principale 8 afin qu'elle donne un toucher souple à la coiffe 1.

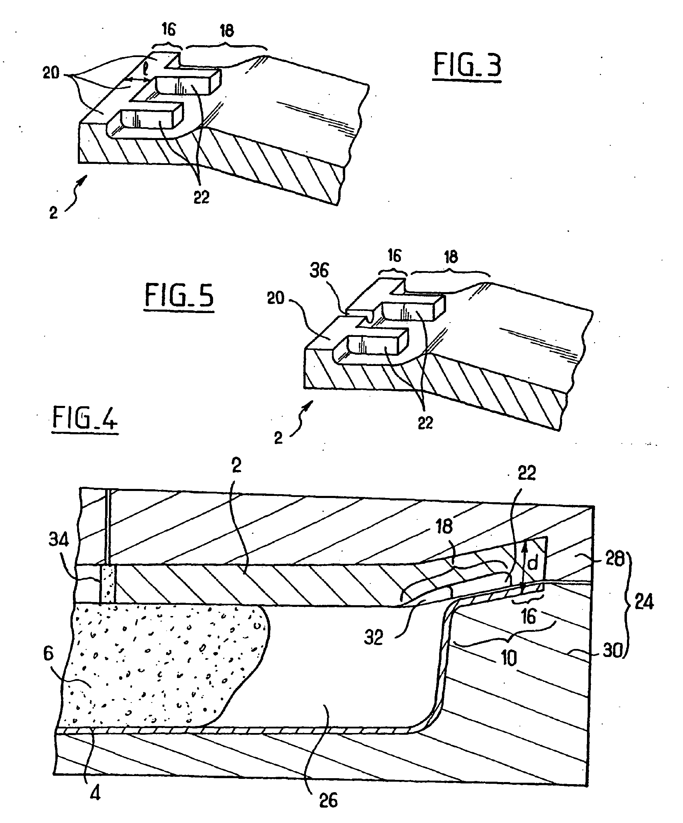

La zone marginale 10 possède une zone d'accrochage 18 qui est pratiquement entièrement contenue dans la zone marginale 10 ou qui peut en déborder légèrement vers la zone principale 8. Dans cette zone d'accrochage 18, l'élément de base 2 forme des creux 32 (voir figure 4). Ainsi, dans la zone d'accrochage 18, l'épaisseur **e**_{**18**} de l'élément de base est inférieure à son épaisseur e₂ dans la zone principale. Dans l'élément d'habillage, le creux 32 est pratiquement entièrement rempli de mousse.

La zone marginale 10 comporte, vers l'extérieur de la zone d'accrochage 18, une zone d'extrémité 16 qui s'étend jusqu'au bord 12 de l'élément de base. Dans cette zone d'extrémité 16, l'élément de base 2 a une épaisseur e₁₆ qui est pratiquement constante et qui est de préférence égale à l'épaisseur e₂ de l'élément de base 2 dans sa partie principale. Cette zone d'extrémité est couverte par la peau sans interposition de mousse 6 entre l'élément de base 2 et la peau 4. Ainsi, la zone d'extrémité 16 n'a pas de mousse. Cependant, sa largeur est relativement faible par rapport à celle de la zone marginale 10.

La zone d'extrémité 16 comporte une série de parties 20 de largeur 1 pratiquement constante, et des ponts 22 qui sont en saillie par rapport aux parties 20 vers la zone principale 8, les saillies pouvant même un peu pénétrer dans cette zone principale.

La largeur 1 de la zone d'extrémité 16, en dehors des ponts 22, est de préférence inférieure à la moitié de la largeur L de la zone marginale 10. En conséquence, la mousse 6 est présente dans la plus grande partie de la zone marginale 10. La zone d'accrochage 18 est donc présente dans la plus grande partie de la zone marginale 10.

On note que, dans la zone d'accrochage 18, la mousse a une faible épaisseur. On conçoit donc que, si la mousse chasse devant elle l'air restant dans la cavité du moule, elle peut avoir des difficultés pour atteindre la zone d'extrémité. La figure 5 représente un perfectionnement qui permet la solution de ce problème. Plus précisément, la figure 5 indique la présence d'un canal de ventilation 36 formé dans l'élément de base 2 entre la zone d'accrochage 18 et l'extérieur de l'élément de base. Ainsi, ce canal de ventilation 36 est formé uniquement dans la zone d'extrémité. Lorsque la mousse chasse devant elle de l'air, celui-ci peut s'échapper par le canal 36, à l'extérieur de l'élément de base.

Il peut être avantageux de former un ou plusieurs canaux 36 de ventilation à des emplacements de l'élément de base 2 auxquels celui-ci a un prolongement, au-delà de la peau, pour sa fixation à un autre élément. De cette manière, la mousse qui pourrait sortir par le canal 36 est cachée. Il est aussi possible d'arracher la mousse superflue après le démoulage de l'élément d'habillage.

On considère maintenant, en référence à la figure 4, le procédé de fabrication de l'élément d'habillage décrit précédemment.

Après sa fabrication, la peau souple 4 est placée dans une matrice 30 d'un moule 24, et elle est ensuite couverte de l'élément de base 2. Le moule est fermé par disposition d'un poinçon 28, de sorte qu'une cavité 26 est délimitée entre le poinçon 28 et la matrice 30.

La distance d qui sépare le poinçon 28 de la matrice 30 dans la zone marginale 10 est pratiquement constante, dans la position de fermeture du moule. Cette distance d est égale pratiquement à la somme de l'épaisseur e₁₆ de l'élément de base 2 dans la zone d'extrémité 16 et de l'épaisseur e₄ de la peau. En conséquence, la peau 4 est appliquée contre l'élément de base 2 dans la zone d'extrémité 16 lorsque le moule est fermé.

On peut ensuite injecter la mousse dans la cavité 26, par un trou 34 formé à cet effet dans l'élément de base 2. La mousse 6 s'écoule entre l'élément de base 2 et la peau 4, mais pas dans la zone d'extrémité 16 puisque, dans celle-ci, la peau est au contact de l'élément de base 2. La mousse ne peut passer éventuellement que par des canaux de ventilation 36 lorsque ceux-ci sont présents. Comme l'épaisseur de l'élément de base 2 dans la zone d'accrochage 18 est inférieure à son épaisseur dans la zone d'extrémité 16, le creux 32 forme un espace entre l'élément de base 2 et la peau dans la zone d'accrochage 18, et la mousse 6 pénètre dans cet espace.

Dans un exemple de réalisation, les épaisseurs e₂, e₁₆ de l'élément de base 2, en dehors de la zone d'accrochage 18, sont de l'ordre de 3 à 5 mm, et l'épaisseur des creux 32, qui correspond à la différence entre les épaisseurs e₁₆ et e₁₈ des zones d'extrémité et d'accrochage, est de l'ordre de 1 à 3 mm. Dans ce cas, la largeur 1 des parties 20, c'est-à-dire la largeur minimale de la zone d'extrémité 16, est avantageusement de l'ordre de 3 à 5 mm. L'épaisseur e₄ de la peau est de préférence inférieure à 1 mm, et l'épaisseur E₈ de la coiffe 1 dans sa zone principale 8 est avantageusement de l'ordre de 3 à 8 mm.

L'élément de base 2 est avantageusement réalisé en polyoléfine, alors que la peau 4 peut être formée d'un ensemble composite comprenant une matière textile, avec une feuille de chlorure de polyvinyle ou de polyoléfine. La mousse est avantageusement formée d'un polyuréthanne.

## Revendications

1. Elément d'habillage (1), du type qui comprend :
un élément de base (2) de matière plastique rigide,
une peau souple (4) couvrant l'élément de base et présentant une épaisseur sensiblement constante, et
une couche de mousse (6) disposée entre l'élément de base et la peau,
l'élément d'habillage présentant une zone principale (8) et une zone marginale (10), la zone marginale s'étendant jusqu'aux bords (12, 14) de l'élément de base et de la peau, l'épaisseur (E₁₀) de l'élément d'habillage (1) dans la zone marginale (10) étant sensiblement constante et inférieure à son épaisseur (e₈) dans la zone principale (8),
**caractérisé en ce que** la zone marginale (10) comprend :
une zone d'extrémité (16) qui s'étend à la périphérie de l'élément d'habillage et dans laquelle l'élément de base présente une épaisseur (e₁₆) sensiblement constante et la couche de mousse est absente, et
une zone d'accrochage (18) placée à distance du bord (12) de l'élément de base (2) et du bord (14) de la peau (4) et dans laquelle la couche de mousse (6) s'étend entre l'élément de base (2) et la peau (4), l'élément de base (2) présentant dans la zone d'accrochage (18) une épaisseur (e₁₈) inférieure à l'épaisseur (e₁₆) dans la zone d'extrémité (16).

2. Elément d'habillage selon la revendication 1, **caractérisé en ce que** la zone d'extrémité (16) présente des parties (20) de largeur (1) sensiblement constante.

3. Elément d'habillage selon la revendication 2, **caractérisé en ce que** la zone d'extrémité (16) présente localement des saillies (22) dirigées vers la zone principale (8).

4. Elément d'habillage selon la revendication 3, **caractérisé en ce que** les saillies (22) s'étendent jusqu'à la zone principale (8).

5. Elément d'habillage selon l'une quelconque des revendications précédentes, **caractérisé en ce que** la zone d'accrochage (18) s'étend sur la plus grande partie de la zone marginale (10).

6. Elément d'habillage selon l'une quelconque des revendications précédentes, **caractérisé en ce qu**'il comporte au moins un canal (36) de ventilation disposé dans l'élément de base (2) dans la zone d'extrémité (16), entre la zone d'accrochage (18) et l'extérieur de la zone d'extrémité (16).

7. Elément d'habillage selon la revendication 6, **caractérisé en ce que** le canal de ventilation au moins (36) est à un emplacement de l'élément d'habillage auquel l'élément de base (2) se prolonge au-delà de la peau (4).

8. Procédé de fabrication d'un élément d'habillage (1) selon l'une quelconque des revendications précédentes, **caractérisé en ce qu**'il comprend les étapes suivantes :
la réalisation d'un élément de base (2) en matière plastique rigide, ayant une zone marginale (10) qui comprend une zone d'extrémité (16) s'étendant à la périphérie et ayant une épaisseur sensiblement constante, et une zone d'accrochage (18) s'étendant à distance du bord (12) de l'élément de base et ayant une épaisseur (e₁₈) inférieure à l'épaisseur (e₁₆) dans la zone d'extrémité (16),
la réalisation d'une peau souple (4) d'épaisseur sensiblement constante,
la couverture de l'élément de base (2) par la peau (4), et la disposition de la peau (4) et de l'élément de base (2) dans une cavité (26) de moule (24) possédant un poinçon (28) et une matrice (30), de sorte que, lorsque le moule est fermé, le poinçon (28) et la matrice (30) sont à une distance (d) sensiblement constante dans la zone marginale (10) qui comprend la zone d'extrémité (16) et au moins une partie de la zone d'accrochage (18),
la fermeture du moule (24) et l'application par pression de la peau (4) contre l'élément de base (2) dans la zone d'extrémité (16), et
l'injection de mousse (6) entre l'élément de base (2) et la peau (4).

9. Procédé selon la revendication 8, dans lequel l'élément de base comporte au moins un canal (36) de ventilation disposé dans la zone d'extrémité (16) entre la zone d'accrochage (18) et l'extérieur de la zone d'extrémité (16), le procédé étant **caractérisé en ce qu**'il comprend l'arrêt de l'injection quand de la mousse sort par le canal, au-delà de la peau (4).

## Claims

1. Trim element (1), of the type which comprises:
a base element (2) of rigid plastics material,
a supple skin (4) covering the base element and having a substantially constant thickness, and
a layer of foam (6) arranged between the base element and the skin,
the trim element having a principal region (8) and a marginal region (10), the marginal region extending as far as the edges (12, 14) of the base element and of the skin, the thickness (E₁₀) of the trim element (1) in the marginal region (10) being substantially constant and smaller than its thickness (E₈) in the principal region (8),
**characterised in that** the marginal region (10) comprises:
an end region (16) which extends at the periphery of the trim element and in which the base element has a substantially constant thickness (e₁₆) and the layer of foam is absent, and
a coupling region (18) which is sited at a distance from the edge (12) of the base element (2) and the edge (14) of the skin (4) and in which the layer of foam (6) extends between the base element (2) and the skin (4), the base element (2) having in the coupling region (18) a thickness (e₁₈) smaller than the thickness (e₁₆) in the end region (16).

2. Trim element according to claim 1, **characterised in that** the end region (16) has portions (20) of substantially constant width (1).

3. Trim element according to claim 2, **characterised in that** the end region (16) has, locally, projections (22) directed towards the principal region (8).

4. Trim element according to claim 3, **characterised in that** the projections (22) extend as far as the principal region (8).

5. Trim element according to any one of the preceding claims, **characterised in that** the coupling region (18) extends over the majority of the marginal region (10) .

6. Trim element according to any one of the preceding claims, **characterised in that** it comprises at least one ventilation duct (36) located in the base element (2) in the end region (16), between the coupling region (18) and the outside of the end region (16).

7. Trim element according to claim 6, **characterised in that** the at least one ventilation duct (36) is at a site on the trim element at which the base element (2) extends beyond the skin (4).

8. Method for the manufacture of a trim element (1) according to any one of the preceding claims, **characterised in that** it comprises the following steps:
the production of a base element (2) of rigid plastics material, having a marginal region (10) which comprises an end region (16) extending at the periphery and having a substantially constant thickness, and a coupling region (18) extending at a distance from the edge (12) of the base element and having a thickness (e₁₈) smaller than the thickness (e₁₆) in the end region (16),
the production of a supple skin (4) of substantially constant thickness,
the covering of the base element (2) by the skin (4), and the arrangement of the skin (4) and the base element (2) in a cavity (26) of a mould (24) having a closure (28) and a main body (30), in such a manner that, when the mould is closed, the closure (28) and the main body (30) are at a substantially constant distance (d) from each other in the marginal region (10) which comprises the end region (16) and at least one portion of the coupling region (18),
the closing of the mould (24) and the application of the skin (4), by pressure, against the base element (2) in the end region (16), and
the injection of foam (6) between the base element (2) and the skin (4).

9. Method according to claim 8, in which the base element comprises at least one ventilation duct (36) located in the end region (16) between the coupling region (18) and the outside of the end region (16), the method being **characterised in that** it comprises the stopping of the injection operation when foam escapes via the duct, beyond the skin (4).

## Patentansprüche

1. Verkleidungselement (1) vom Typ mit:
einem Basiselement (2) aus steifem Kunststoffmaterial, einer weichen Haut (4), welche das Basiselement bedeckt und eine im wesentlichen konstante Dicke aufweist, und einer Schaumschicht (6), die zwischen dem Basiselement und der Haut angeordnet ist,
wobei das Verkleidungselement eine Hauptzone (8) und eine Randzone (10) aufweist, sich die Randzone bis zu den Rändern (12, 14) des Basiselementes und der Haut erstreckt, die Dicke (E₁₀) des Verkleidungselementes (1) in der Randzone (10) im wesentlichen konstant und kleiner als seine Dicke (e₈) der Hauptzone (8) ist,
**dadurch gekennzeichnet, daß** die Randzone (10) aufweist:
eine Endzone (16), die sich an dem Umfang des Verkleidungselementes erstreckt und in welcher das Basiselement eine im wesentlichen konstante Dicke (e₁₆) aufweist und in der die Schaumschicht nicht vorhanden ist, und
eine Einhängezone (18), die im Abstand von dem Rand (12) des Basiselementes (2) und des Randes (14) der Haut (4) angeordnet ist und in welcher sich die Schaumschicht (6) zwischen dem Basiselement (2) und der Haut (4) erstreckt, wobei das Basiselement (2) in der Einhängezone (18) eine Dicke (e₁₈) aufweist, die kleiner als die Dicke (e₁₆) in der Endzone (16) ist.

2. Verkleidungselement nach Anspruch 1, **dadurch gekennzeichnet, daß** die Endzone (16) Teile (20) mit im wesentlichen konstanter Breite (1) aufweist.

3. Verkleidungselement nach Anspruch 2, **dadurch gekennzeichnet, daß** die Endzone (16) lokal Vorsprünge (22) aufweist, die zu der Hauptzone (8) hin gerichtet sind.

4. Verkleidungselement nach Anspruch 3, **dadurch gekennzeichnet, daß** sich die Vorsprünge (22) bis zu der Hauptzone (8) erstrecken.

5. Verkleidungselement nach einem der vorhergehenden Ansprüche, **dadurch gekennzeichnet, daß** sich die Einhängezone (18) auf den größten Teil der Randzone (10) erstreckt.

6. Verkleidungselement nach einem der vorhergehenden Ansprüche, **dadurch gekennzeichnet, daß** es mindestens einen Lüftungskanal (36) aufweist, der in dem Basiselement (2) in der Endzone (16) zwischen der Einhängezone (18) und außerhalb der Endzone (16) angeordnet ist.

7. Verkleidungselement nach Anspruch 6, **dadurch gekennzeichnet, daß** sich mindestens der Lüftungskanal (36) an einer Stelle des Verkleidungselementes befindet, an der sich das Basiselement (2) über die Haut (4) verlängert.

8. Herstellungsverfahren eines Verkleidungselementes (1) nach einem der vorhergehenden Ansprüche, **dadurch gekennzeichnet, daß** es folgende Schritte aufweist:
die Realisierung eines Basiselementes (2) aus steifem Kunststoffmaterial, wobei das Basiselement eine Randzone (10) hat, die eine Endzone (16), welche sich an dem Umfang erstreckt und eine im wesentlichen konstante Dicke hat, und eine Einhängezone (18) aufweist, die sich im Abstand von dem Rand (12) des Basiselementes erstreckt und eine Dicke (e₁₈) hat, die kleiner als die Dicke (e₁₆) in der Endzone (16) ist,
Realisierung einer weichen Haut (4) mit im wesentlichen konstanter Dicke,
Bedecken des Basiselementes (2) mit der Haut (4) und Anordnen der Haut (4) und des Basiselementes (2) in einer Vertiefung (26) der Form (24), die ein Stößelgesenk (28) und eine Matrix (30) aufweist, derart, daß sich das Stößelgesenk (28) und die Matrix (30), wenn die Form geschlossen ist, in einem im wesentlichen konstanten Abstand (d) in der Randzone (10) befinden, welche die Endzone (16) und mindestens einen Teil der Einhängezone (18) aufweist,
Schließen der Form (24) und Aufbringen der Haut (4) durch Druck gegen das Basiselement (2) in der Endzone (16) und
Einspritzen des Schaums (6) zwischen das Basiselement (2) und die Haut (4).

9. Verfahren nach Anspruch 8, in welchem das Basiselement mindestens einen Lüftungskanal (36) aufweist, der in der Endzone (16) zwischen der Einhängezone (18) und außerhalb der Endzone (16) angeordnet ist, wobei das Verfahren **dadurch gekennzeichnet ist, daß** es das Anhalten des Einspritzens aufweist, wenn der Schaum durch den Kanal über die Haut (4) austritt.
